# EUROPÄISCHE PATENTSCHRIFT

(11) **EP 3 013 603 B1**
(45) Veröffentlichungstag und Bekanntmachung des Hinweises auf die Patenterteilung: **14.11.2018**
(21) Anmeldenummer: 14715576.6
(22) Anmeldetag: 03.04.2014
(51) Int. Cl.: B60C 9/20

(54) **FAHRZEUGLUFTREIFEN**
PNEUMATIC VEHICLE TYRE
PNEUMATIQUE DE VÉHICULE

(30) Priorität: 28.06.2013 DE 102013106778
(43) Veröffentlichungstag der Anmeldung: 04.05.2016
(73) Patentinhaber: Continental Reifen Deutschland GmbH, 30165 Hannover (DE)
(72) Erfinder: RAJAN, Vipin, 30173 Hannover (DE); KEATHLEY, Alexis, 30163 Hannover (DE); MEYER, Hendrik, Mount Vernon, 62864 (US)
(74) Vertreter: Finger, Karsten
(86) Internationale Anmeldenummer: PCT/EP2014/056647
(87) Internationale Veröffentlichungsnummer: WO 2014/206589

(56) Entgegenhaltungen:
- EP-A1- 0 655 352
- EP-A2- 0 143 651
- EP-A2- 0 342 644
- WO-A1-2012/164442
- "POLYGONALLY PREFORMED STEEL ELEMENTS", RESEARCH DISCLOSURE, MASON PUBLICATIONS, HAMPSHIRE, GB, Nr. 363, 1. Juli 1994 (1994-07-01), Seiten 359-365, XP000461309, ISSN: 0374-4353

## Beschreibung

Die Erfindung betrifft einen Fahrzeugluftreifen in Radialbauart, insbesondere einen Nutzfahrzeugreifen, mit einem Gürtelpaket aus wenigstens drei Gürtellagen, von denen zwei Gürtellagen als sogenannte Arbeitslagen ausgestaltet sind und von denen die radial äußerste Gürtellage als sogenannte Abdecklage ausgestaltet ist, wobei jede dieser Gürtellagen aus in Elastomer eingebetteten Festigkeitsträgern aus Stahlkord besteht und wobei die Stahlkorde jeder Gürtellage jeweils parallel zueinander und beabstandet voneinander angeordnet sind, wobei die Stahlfilamente der Festigkeitsträger der Schutzlage einen Filamentdurchmesser zwischen 0,10 mm und 0,35 mm aufweisen, wobei der Festigkeitsträgerdurchmesser zwischen 0,20 mm und 0,85 mm beträgt, wobei die Schutzlage eine Bruchfestigkeit zwischen 15 kN/dm und 95 kN/dm aufweist und wobei diese Festigkeitsträger in einer Dichte zwischen 50 und 120 ends per decimeter (epdm) in der Schutzlage angeordnet sind.

Ein derartiger Fahrzeugluftreifen ist aus der WO 2012/1644442 A1 bekannt.

Nutzfahrzeugreifen mit einem Gürtel, welcher zwei Arbeitslagen und eine Abdecklage aufweist, sind dem Fachmann bekannt. Üblicherweise weist der Gürtel von Nutzfahrzeugreifen vier Lagen auf, welche aus in Gummimischungen eingebetteten Stahlkorden bestehen. Die radial innerste Lage wird bei einem 4-Lagen-Gürtel als "1.Gürtellage" oder nach ihrer Funktion als "Sperrlage" bezeichnet. Radial außen auf dieser sind die 2. Gürtellage und die 3. Gürtellage in Funktion von sogenannten "Arbeitslagen" angeordnet. Die radial äußere Arbeitslage wird von der 4. Gürtellage, der sogenannten "Abdecklage" oder "Schutzlage", abgedeckt.

Die Stahlkorde der 1.Gürtellage weisen in der Regel einen Winkel > 45° in Bezug auf die Umfangsrichtung auf. Die 1. Gürtellage wird aufgrund ihrer Funktion: Sperrung der Beweglichkeit der Arbeitslagen in Umfangsrichtung, als sogenannte "Sperrlage" bezeichnet. Die Stahlkorde der beiden Arbeitslagen weisen typischerweise einen gleichen Winkel zwischen 15° und 30° in Bezug auf die Reifenumfangsrichtung auf, wobei die Stahlkorde der einen Arbeitslage gegenläufig zu den Stahlkorden der anderen Arbeitslage in Bezug auf die Reifenumfangsrichtung geneigt sind. So sind die Stahlkorde der einen Arbeitslage kreuzend zu den Stahlkorden der anderen Arbeitslage angeordnet. Die Arbeitslagen übernehmen hohe Scher- und Zugkräfte, tragen die Hauptlast im Gürtel und sind daher für die Gürtelhaltbarkeit von besonderer Bedeutung.

Die 4. Gürtellage hat die Funktion einer Schutzlage für die beiden darunter liegenden Arbeitslagen, indem sie eine Barriere für Steine oder andere Gegenstände darstellt, die durch das Laufstreifenpaket dringen könnten. Ohne die Schutzlage würden die Korde der Arbeitslagen durch durchdringende Steine verletzt werden und verstärkt der Korrosion ausgesetzt sein, was am Ende die Traglast, die Haltbarkeit und die Runderneuerungsfähigkeit des Reifens reduzieren würde, soweit der Reifen runderneuerungsfähig ist.

Aus der EP 0 143 651 A2 ist es bekannt, in der radial äußeren Gürtellage Monofilamente oder Korde aus Stahl, beispielsweise der Konstruktion 1x3 oder eine 2-Lagen-Konstruktion mit einem Kern aus 1 oder 2 Filamenten und mehreren äußeren Lagenfilamenten,

Es ist weiterhin bekannt, für die Schutzlage Stahlkorde der Konstruktion 3x0,20 + 6x0,35 zu verwenden. Dieser Stahlkord weist einen Kernstrang aus 3 miteinander verdrehten Stahlfilamenten des Durchmessers von 0,20 mm auf, welche von 6 Filamenten des Durchmessers von 0,35 mm umgeben sind. Weiterhin ist es bekannt, für die Schutzlage Stahlkorde der Konstruktion 1x0,40 + 5x0,40 zu verwenden. Dieser Stahlkord weist ein Kernfilament des Durchmessers von 0,40 mm auf, welcher von 5 Filamenten des Durchmessers von 0,40 mm umgeben ist. Die Bruchfestigkeit der vorgenannten Schutzlage liegt zwischen 55 bis 130 kN/dm.

Hierdurch ergibt sich ein Korddurchmesser von etwa 1,13 mm und als gummierte Lage eine Dicke zwischen etwa 1,60 mm und 1,85 mm. Diese Korde sind in einer Dichte von 34 bis 65 ends per decimeter (epdm) in der Schutzlage angeordnet.

Man ist immer bestrebt, den Fahrzeugluftreifen hinsichtlich seiner Haltbarkeit zu verbessern und, wenn zusätzlich möglich, dessen Gewicht sowie dessen Gestehungskosten zu senken.
Der Erfindung liegt demnach die Aufgabe zugrunde, einen Nutzfahrzeugreifen der eingangs genannten Art mit einem wenigstens dreilagigen Gürtelpaket derart auszuführen, dass dessen Haltbarkeit verbessert ist, dessen Gewicht gesenkt und zusätzlich dessen Gestehungskosten gesenkt sind.
Gelöst wird die Aufgabe erfindungsgemäß dadurch, dass die Festigkeitsträger der Schutzlage Stahlkorde aus miteinander verdrehten Stahlfilamenten sind, welche die Konstruktion 2x0.30, 2+2x0.32, 2+2x0.28, 2x0.15 oder 3x0.10 aufweisen.
Es ist ein Nutzfahrzeugreifen mit einem wenigstens dreilagigen Gürtel geschaffen, dessen Schutzlage hinsichtlich ihrer Funktion "Schutz" der unter ihr angeordneten Lagen bezüglich eindringender Steine oder anderer Gegenstände durch "Abfangen" dieser Steine oder anderer Gegenstände, hinsichtlich seines Gewichtes, als auch hinsichtlich seiner Gestehungskosten verbessert ist.
In der Schutzlage des erfindungsgemäßen Reifens ist in etwa die gleiche Menge an Stahlkord wie in der Schutzlage eines Reifens des Standes der Technik angeordnet. Jedoch ist die Stahlmenge anders verteilt: jeder Kord dieser Schutzlage des erfindungsgemäßen Reifens weist aufgrund seines geringeren Korddurchmessers eine geringere Stahlmenge auf, während jedoch die Korddichte erhöht ist. Durch diese Maßnahme ist die Gürtelflexibilität erhöht, welches sich positiv auf die Haltbarkeit und den Rollwiderstand des Reifens auswirkt. Zudem ist die Gefahr der Entstehung von sogenannten "groove cracks" verringert, da durch die Schutzlage unterhalb der betreffenden Rille geringere Steifigkeitssprünge vorhanden sind.

Durch die höhere Korddichte in der Schutzlage ist die Schutzlage hinsichtlich ihrer Schutzfunktion verbessert. Die höhere Korddichte bildet ein wirksameres "Gitter" gegen eindringende Gegenstände.
Zudem hat der Kord einen geringeren Durchmesser als ein Kord des Standes der Technik, so dass bei einer höheren Dichte an Korden in der Schutzlage zudem an Elastomermaterial, welches die Korde einbettet, eingespart ist.

Die Bruchfestigkeit wird ermittelt nach ASTMD 885.

Vorteilhaft ist es, wenn die Festigkeitsträger der Schutzlage aus Stahl der Festigkeitsklasse HT oder höher bestehen, wodurch eine möglichst hohe Festigkeit pro Kordvolumen erreicht ist.

Die folgende Tabelle zeigt Kordkonstruktionen, die in der Abdecklage eines erfindungsgemäßen Fahrzeugluftreifens eingesetzt werden (Zeilen 2 - 6) im Vergleich zu Korden des Standes der Technik (Zeilen 1a, 1b).

| | Kordkonstruktion | Außen durchmesser des Kordes (in mm) | epdm | Kord zu Kord-Abstand (in mm) | Bruchfestigkeit (in kN/dem) |
|---|---|---|---|---|---|
| 1a | 3x0,20+6x0,35 | 1,13 | 60 | 0,54 | 100 |
| 1b | 3x0,20+6x0,35 | 1,13 | 34 | 1,81 | 57 |
| 2 | 2x0,30 | 0,60 | 95 | 0,46 | 42 |
| 3 | 2+2x0,32 | 0,83 | 56 | 0,97 | 53 |
| 4 | 2+2x0,28 | 0,74 | 65 | 0,81 | 43 |
| 5 | 2x0,15 | 0,30 | 110 | 0,61 | 15 |
| 6 | 3x0,10 | 0,22 | 120 | 0,62 | 15 |

Zu jeder Kordkonstruktion ist der Außendurchmesser dieses Kordes, dessen Anordnungsdichte in der Abdecklage, der sich hieraus ergebende Kord zu Kord-Abstand sowie dessen Bruchfestigkeit angegeben.

Durch einen geringeren Korddurchmesser und somit einer geringeren Lagendicke bei gleichzeitig geringerem Kord-zu-Kord-Abstand sind geringere Materialkosten der Abdecklage erreicht.

Weitere Merkmale, Vorteile und Einzelheiten der Erfindung werden nun anhand der Zeichnungen, die ein schematisches Ausführungsbeispiel darstellen, näher beschrieben. Dabei zeigen die
Fig.1 einen Teilquerschnitt durch die eine Hälfte eine Fahrzeugluftreifens im Bereich des Gürtels und des Laufstreifens;
Fig. 2 einen Querschnitt durch einen Stahlkord der Schutzlage des Reifens der Fig. 1.

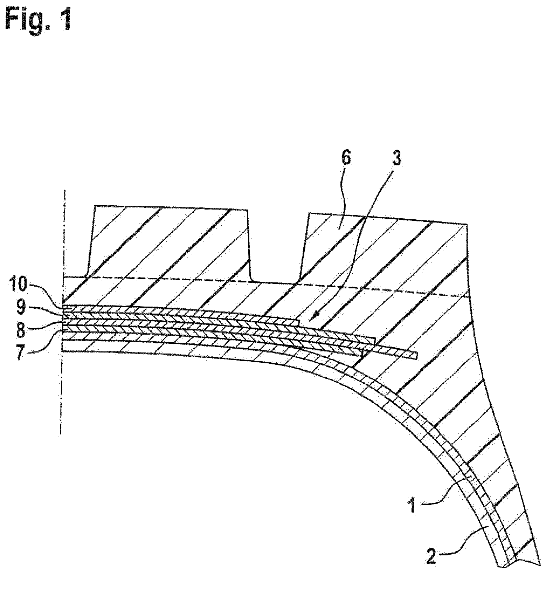

Fig. 1 zeigt einen Querschnitt durch den Laufstreifen und den Gürtelbereich eines Fahrzeugluftreifens für Lastkraftwagen in einer üblichen Standardkonstruktion mit einer Karkasse 1 mit Stahlkorden als Festigkeitsträgern, einer luftdichten Innenschicht 2, einem mehrlagigen Gürtelpaket 3 und einem profilierten Laufstreifen 6.

Das Gürtelpaket 3 weist vier Gürtellagen 7, 8, 9 und 10 auf, wobei die vierte, radial äußerste Gürtellage die geringste Breite von allen Lagen aufweist und die sogenannte Schutzlage 10 bildet. Die erste Gürtellage ist die sogenannte Sperrlage 7, die zweite Gürtellage und die dritte Gürtellage sind die sogenannten Arbeitslagen 8, 9. Die breiteste Gürtellage ist die zweite Gürtellage 8, welche demnach die erste Gürtellage 7 komplett überdeckt. Die dritte Gürtellage 9 ist etwas breiter als oder gleich breit wie die erste Gürtellage 7. Die vierte Gürtellage 10 kann ferner gleich breit wie die dritte Gürtellage 9 ausgeführt sein. Sämtliche Gürtellagen 7, 8, 9, 10 bestehen aus in eine Gummimischung, der Gürtelgummierung, eingebetteten Festigkeitsträgern aus Stahlkord, wobei die Stahlkorde parallel zueinander und beabstandet voneinander angeordnet sind.

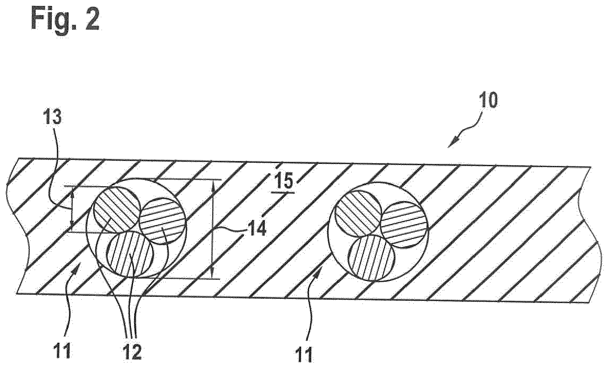

Die Fig. 2 zeigt einen Querschnitt durch die Schutzlage 10 des Reifens der Fig. 1. Die Schutzlage 10 weist Stahlkorde 11 der Festigkeitsklasse HT auf, welche in eine Gummimischung 15 eingebettet sind. Die Stahlkorde 11 sind parallel zueinander und beabstandet voneinander in dieser Schutzlage 10 angeordnet. Die Stahlkorde 11 weisen die Konstruktion 3 x 0.10 auf, was bedeutet, dass drei Stahlfilamente 12 miteinander verdreht sind. Der Filamentdurchmesser 13 beträgt 0.10 mm. Der Festigkeitsträgerdurchmesser 14 beträgt 0,22 mm. Die Bruchfestigkeit der Schutzlage liegt bei 15 kN/dm. Die Festigkeitsträger 11 sind in einer Dichte von etwa 120 ends per decimeter (epdm) in der Schutzlage 10 angeordnet.

### Bezugszeichenliste

- 1: Karkasse
- 2: Innenschicht
- 3: Gürtelpaket
- 6: Laufstreifen
- 7: Sperrlage (1. Gürtellage)
- 8: Arbeitslage (2. Gürtellage)
- 9: Arbeitslage (3. Gürtellage)
- 10: Schutzlage (4. Gürtellage)
- 11: Festigkeitsträger / Stahlkord
- 12: Filament
- 13: Filamentdurchmesser
- 14: Korddurchmesser

## Patentansprüche

1. Fahrzeugluftreifen in Radialbauart, insbesondere Nutzfahrzeugreifen, mit einem Gürtelpaket (3) aus wenigstens drei Lagen (8, 9, 10), nämlich zwei Arbeitslagen (8, 9) und einer radial außen in Bezug auf die Arbeitslagen (8, 9) angeordneten Schutzlage (10), wobei jede Gürtellage (8, 9, 10) Festigkeitsträger (11) aus einem oder mehreren Stahlfilamenten (11) aufweist, wobei die Festigkeitsträger (11) in jeder Gürtellage (8, 9, 10) jeweils parallel zueinander und beabstandet voneinander angeordnet sind, wobei die Stahlfilamente (12) der Festigkeitsträger (11) der Schutzlage (10) einen Filamentdurchmesser (13) zwischen 0,10 mm und 0,35 mm aufweisen, wobei der Festigkeitsträgerdurchmesser (14) zwischen 0,20 mm und 0,85 mm beträgt, wobei die Schutzlage (10) eine Bruchfestigkeit zwischen 15 kN/dm und 95 kN/dm aufweist und wobei diese Festigkeitsträger (11) in einer Dichte zwischen 50 und 120 ends per decimeter (epdm) in der Schutzlage (10) angeordnet sind, wobei die Festigkeitsträger (11) der Schutzlage (10) Stahlkorde (11) aus miteinander verdrehten Stahlfilamenten (12) sind, **dadurch gekennzeichnet, dass** die Stahlkorde die Konstruktion 2x0.30, 2+2x0.32, 2+2x0.28, 2x0.15 oder 3x0.10 aufweisen.

2. Fahrzeugluftreifen nach Anspruch 1, **dadurch gekennzeichnet, dass** die Filamente (12) aus Stahl der Festigkeitsklasse HT oder höher bestehen.

## Claims

1. Radial pneumatic vehicle tire, in particular a tire of a commercial vehicle, having a belt assembly (3) comprising at least three plies (8, 9, 10), to be specific two working plies (8, 9) and a protective ply (10) arranged radially outside with respect to the working plies (8, 9), each belt ply (8, 9, 10) having reinforcements (11) comprising one or more steel filaments (11), the reinforcements (11) in each belt ply (8, 9, 10) being respectively arranged parallel to one another and spaced apart from one another,
wherein the steel filaments (12) of the reinforcements (11) of the protective ply (10) have a filament diameter (13) of between 0.10 mm and 0.35 mm, wherein the reinforcement diameter (14) is between 0.20 mm and 0.85 mm, wherein the protective ply (10) has a rupture strength of between 15 kN/dm and 95 kN/dm and wherein these reinforcements (11) are arranged in the protective ply (10) with a density of between 50 and 120 ends per decimeter (epdm), wherein the reinforcements (11) of the protective ply (10) are steel cords (11) of twisted together steel filaments (12), **characterized in that** the steel cords have the construction 2×0.30, 2+2×0.32, 2+2×0.28, 2×0.15 or 3×0.10.

2. Pneumatic vehicle tire according to Claim 1, **characterized in that** the filaments (12) consist of steel of the strength class HT or higher.

## Revendications

1. Pneumatique de véhicule de type radial, en particulier pneu de véhicule utilitaire, avec un paquet de ceinture (3) composé d'au moins trois couches (8, 9, 10), à savoir deux couches de travail (8, 9) et une couche de protection (10) disposée radialement à l'extérieur par rapport aux couches de travail (8, 9), dans lequel chaque couche de ceinture (8, 9, 10) présente des éléments de résistance (11) composés d'un ou de plusieurs filament(s) d'acier (11), dans lequel les éléments de résistance (11) sont disposés dans chaque couche de ceinture (8, 9, 10) chaque fois parallèlement l'un à l'autre et à distance l'un de l'autre,
dans lequel les filaments d'acier (12) des éléments de résistance (11) de la couche de protection (10) présentent un diamètre de filament (13) compris entre 0,10 mm et 0,35 mm, dans lequel le diamètre des éléments de résistance (14) vaut entre 0,20 mm et 0,85 mm,
dans lequel la couche de protection (10) présente une résistance à la rupture comprise entre 15 kN/dm et 95 kN/dm et dans lequel ces éléments de résistance (11) sont disposés avec une densité comprise entre 50 et 120 extrémités par décimètre (epdm) dans la couche de protection (10),
dans lequel les éléments de résistance (11) de la couche de protection (10) sont des câbles d'acier (11) composés de filaments d'acier (12) torsadés les uns avec les autres,
**caractérisé en ce que** les câbles d'acier présentent la structure 2x0,30, 2+2x0,32, 2+2x0,28, 2x0,15 ou 3x0,10.

2. Pneumatique de véhicule selon la revendication 1, **caractérisé en ce que** les filaments (12) sont constitués d'acier de la classe de résistance HT ou supérieure.
